(19) Europäisches Patentamt
European Patent Office
Office européen des brevets

(11) **EP 3 006 523 B1**

(12) **EUROPEAN PATENT SPECIFICATION**

(45) Date of publication and mention of the grant of the patent:
**02.08.2017 Bulletin 2017/31**

(21) Application number: **14808339.7**

(22) Date of filing: **03.03.2014**

(51) Int Cl.:
***C09D 133/00*** *(2006.01)*      ***C09D 5/02*** *(2006.01)*
***C09D 5/16*** *(2006.01)*      ***C09D 7/12*** *(2006.01)*

(86) International application number:
**PCT/JP2014/001138**

(87) International publication number:
**WO 2014/196108 (11.12.2014 Gazette 2014/50)**

(54) **COLD-CURING PHOTOCATALYTIC COATING MATERIAL, COLD-CURING COATING COMPOSITION AND INTERIOR MATERIAL**

BEI NORMALTEMPERATUR HÄRTBARES FOTOKATALYTISCHES BESCHICHTUNGSMATERIAL, BEI NORMALTEMPERATUR HÄRTBARE BESCHICHTUNGSZUSAMMENSETZUNG UND INNENMATERIAL

MATÉRIAU DE REVÊTEMENT PHOTOCATALYTIQUE DURCISSABLE À TEMPÉRATURE ORDINAIRE, COMPOSITION DE REVÊTEMENT DURCISSABLE À TEMPÉRATURE ORDINAIRE ET MATÉRIAU INTÉRIEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.06.2013 JP 2013117943**

(43) Date of publication of application:
**13.04.2016 Bulletin 2016/15**

(73) Proprietor: **Panasonic Intellectual Property Management Co., Ltd.**
**Osaka-shi, Osaka 540-6207 (JP)**

(72) Inventors:
• **UEDA, Takeshi**
  **Osaka-shi,**
  **Osaka 540-6207 (JP)**
• **KINUGAWA, Kensaku**
  **Osaka-shi,**
  **Osaka 540-6207 (JP)**
• **YAMASHINA, Daigo**
  **Osaka-shi,**
  **Osaka 540-6207 (JP)**

(74) Representative: **Müller-Boré & Partner**
**Patentanwälte PartG mbB**
**Friedenheimer Brücke 21**
**80639 München (DE)**

(56) References cited:
**EP-A1- 1 873 218      EP-A1- 2 075 069**
**WO-A1-2011/078203      WO-A1-2013/002151**
**JP-A- 2000 254 518      JP-A- 2005 120 212**
**JP-A- 2006 321 993      JP-A- 2008 031 297**
**JP-A- 2008 080 253**

• **DATABASE WPI Week 201021 Thomson Scientific, London, GB; AN 2010-B59284 XP002756051, -& CN 101 638 526 A (BEIJING NEW BUILDING MATERIAL GEN FACTOR) 3 February 2010 (2010-02-03)**
• **DATABASE WPI Week 200406 Thomson Scientific, London, GB; AN 2004-056181 XP002756052, -& JP 2003 277202 A (TOTO LTD) 2 October 2003 (2003-10-02)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a cold-curing photocatalytic coating material, a cold-curing coating composition and an interior material. More specifically, the present invention relates to a cold-curing photocatalytic coating material, a cold-curing coating composition, each of which enhances film physical properties while obtaining high antibacterial properties and antiviral properties, and to an interior material applied therewith.

BACKGROUND ART

Various types of antibacterial members have been developed and turned into products to reduce microbes in the environment because of increased consumers' consciousness of hygiene. In general, antibacterial members used for interior members in houses or vehicles contain antibacterial materials such as silver and zinc (for example, refer to Patent Literatures 1 and 2). However, silver, zinc and the like have problems in points of price and ecotoxicity.

Accordingly, attempts are being made to use titanium oxide, which is cheap, abundant, and less ecotoxic, as an antibacterial material (for example, refer to Patent Literature 3). Titanium oxide is photocatalytically active, and the antibacterial action using the photocatalytic activity thereof is attracting attention. Then, a coating material, which contains the titanium oxide as described above and is provided with the antibacterial properties, is developed (for example, refer to Patent Literature 4).

CITATION LIST

PATENT LITERATURE

    Patent Literature 1: Japanese Unexamined Patent Application Publication No. 2008-255101
    Patent Literature 2: Japanese Unexamined Patent Application Publication No. 2011-42642
    Patent Literature 3: Japanese Unexamined Patent Application Publication No. 2003-275601
    Patent Literature 4: Japanese Unexamined Patent Application Publication No. 2009-161708

SUMMARY OF INVENTION

Here, such a conventional antibacterial coating material frequently uses an organic solvent for enhancing drying properties and fluidity. However, in recent years, in order to reduce the environmental load and to enhance the application work environment, and owing to the problem of the sick house, and the like, the use of such a solvent-based coating material has tended to be avoided. Therefore, an aqueous coating material provided with the antibacterial properties is required.

Moreover, in order to enhance antibacterial properties of a film obtained from the antibacterial coating material, it is necessary to allow a large number of photocatalyst particles to be present on a surface of the film. However, in order to allow a large number of the photocatalyst particles to be present on the surface of the film, it is necessary to increase an additional amount thereof, and accordingly, it is apprehended that physical properties of the film may decrease owing to such an increase of the photocatalyst particles.

The present invention has been made in consideration of such a problem as described above, which is inherent in the prior art. Then, it is an object of the present invention to provide a cold-curing photocatalytic coating material, a cold-curing coating composition and an interior material, each of which has high antibacterial properties and antiviral properties though reduces a usage amount of the organic solvent, and suppresses the decrease of the physical properties of the film.

A cold-curing photocatalytic coating material according to a first aspect of the present invention contains an acrylic emulsion-type resin including acrylic resin particles with an average particle diameter of 80 nm to 200 nm, in which a glass transition temperature is 20°C or less. Moreover, the photocatalytic coating material contains: copper compound-supported titanium oxide in which fineness of grind prescribed in JIS K5600-2-5 is 1 $\mu$m to 30 $\mu$m; and an aqueous medium that disperses the acrylic emulsion-type resin and the copper compound-supported titanium oxide. Then, the copper compound-supported titanium oxide is contained by 1 to 80 parts by mass in 100 parts by mass of a non-volatile matter content of the photocatalytic coating material. Moreover, a minimum film-forming temperature of the photocatalytic coating material is 10°C or less, and a content of an organic solvent therein is less than 10 % by mass.

A cold-curing coating composition according to a second aspect of the present invention contains: the cold-curing photocatalytic coating material according to the first aspect; and a coating material including a homopolymer.

A cold-curing coating composition according to a third aspect of the present invention is the cold-curing coating composition according to the second aspect, wherein a glass transition temperature of the homopolymer exceeds 20°C.

A cold-curing coating composition according to a fourth aspect of the present invention is the cold-curing coating composition according to either one of the second and third aspects, wherein the coating material containing the homopolymer is an anionic coating material.

An interior material according to a fifth aspect of the present invention is wherein the interior material is applied with the cold-curing photocatalytic coating material according to the first aspect.

An interior material according to a sixth aspect of the present invention is wherein the interior material is applied with the cold-curing coating composition according to any one of the second to fourth aspects.

DESCRIPTION OF EMBODIMENTS

A description is made below in detail of a cold-curing photocatalytic coating material, a cold-curing coating composition and an interior material according to an embodiment of the present invention.

[Cold-curing photocatalytic coating material]

The cold-curing photocatalytic coating material according to the embodiment of the present invention (hereinafter, also referred to as a photocatalytic coating material) contains an acrylic emulsion-type resin, copper compound-supported titanium oxide, and an aqueous medium that disperses the acrylic emulsion-type resin and the copper compound-supported titanium oxide. The acrylic emulsion-type resin includes acrylic resin particles with an average particle diameter of 80 nm to 200 nm, and a glass transition temperature of the acrylic emulsion-type resin is 20°C or less. Moreover, in the photocatalytic coating material, fineness of grind of the copper compound-supported titanium oxide defined in Japanese Industrial Standards JIS K5600-2-5 is 1 $\mu$m to 30 $\mu$m. Then, in 100 parts by mass of a non-volatile matter content of the photocatalytic coating material, the copper compound-supported titanium oxide ix contained by 1 to 80 parts by mass. Moreover, a minimum film-forming temperature of the photocatalytic coating material is 10°C or less, and a content of an organic solvent in the photocatalytic coating material is less than 10 % by mass.

<Acrylic emulsion-type resin>

The photocatalytic coating material according to this embodiment contains the acrylic emulsion-type resin as a binder resin. The acrylic emulsion-type resin is one obtained by dispersing the acrylic resin particles into water, followed by emulsification, and the acrylic resin particles are fused to one another by being dried, and form a film.

Then, in the acrylic resin particles in the acrylic emulsion-type resin, the average particle diameter thereof is 80 nm to 200 nm. In a case where the average particle diameter is less than 80 nm, it is apprehended that it may become difficult to obtain such an emulsion resin. Moreover, in a case where the average particle diameter exceeds 200 nm, a uniform film cannot be obtained, and the fineness of grind of the copper compound-supported titanium oxide decreases, and accordingly, it is apprehended that antibacterial properties may be deteriorated. From a viewpoint of enhancing uniformity of the film, it is preferable that the acrylic resin particles in the acrylic emulsion-type resin have an average particle diameter of 100 nm to 150 nm. Note that, as the average particle diameter of the acrylic resin particles, an average particle diameter is employed, which is measured by the dynamic light scattering and is obtained by the cumulant analysis method.

Moreover, the glass transition temperature of the acrylic emulsion-type resin is 20°C or less. In usual, a minimum film-forming temperature (MFT) of the emulsion resin exhibits a value close to a glass transition temperature of the emulsion resin, and accordingly, in a case where the glass transition temperature of the emulsion resin exceeds 20°C, a minimum film-forming temperature of the obtained film also exceeds 20°C frequently. In such a case where the minimum film-forming temperature of the film is high, then it is apprehended that the film may not be sufficiently formed, and that a function as the film may decrease, resulting in a deterioration of antibacterial properties/antiviral properties. Note that a lower limit of the glass transition temperature of the emulsion resin is not particularly limited; however, for example, can be set at 0°C.

The acrylic emulsion-type resin as described above is prepared from (a) a polymerizable unsaturated monomer, (b) a surfactant, (c) a polymerization initiator, and (d) an aqueous medium. That is to say, the acrylic emulsion-type resin is prepared in such a manner that the polymerizable unsaturated monomer unsoluble to the aqueous medium is polymerized by mixing the polymerizable unsaturated monomer and the surfactant with the aqueous medium, and further, by adding the polymerization initiator to a resultant mixture. Note that the acrylic emulsion-type resin may contain (e) an arbitrary component according to needs.

(a) Polymerizable unsaturated monomer

In an event of preparing the acrylic emulsion-type resin, the polymerizable unsaturated monomer that composes the acrylic resin particles is used. As the polymerizable unsaturated monomer, there can be used: acrylic acid or methacrylic acid alkyl ester or cycloalkyl ester with a carbon number of 1 to 24; and acrylic acid or methacrylic acid alkoxyalkyl ester with a carbon number of 2 to 18. Moreover, as the polymerizable unsaturated monomer, acrylic acid or methacrylic acid hydroxyalkyl ester with a carbon number of 2 to 8 can be used.

As the acrylic acid or methacrylic acid alkyl ester or cycloalkyl ester with a carbon number of 1 to 24, for example, there can be mentioned methyl (meth)acrylate, ethyl (meth)acrylate, propyl (meth)acrylate, and i-propyl (meth)acrylate. Moreover, n-butyl (meth)acrylate, i-butyl (meth)acrylate, t-butyl (meth)acrylate, hexyl (meth)acrylate, 2-ethylhexyl (meth)acrylate, and n-octyl (meth)acrylate can be mentioned. Furthermore, decyl acrylate, stearyl (meth)acrylate, lauryl acrylate, cyclohexyl (meth)acrylate can be mentioned.

As the acrylic acid or methacrylic acid alkoxyalkyl ester with a carbon number of 2 to 18, there can be mentioned methoxybutyl (meth)acrylate, methoxyethyl (meth)acrylate, ethoxybutyl (meth)acrylate and the like.

As the acrylic acid or methacrylic acid hydroxyalkyl ester with a carbon number of 2 to 8, 2-hydroxyethyl (meth)acrylate, 3-hydroxypropyl (meth)acrylate and hydroxybutyl (meth)acrylate can be mentioned.

In the event of preparing the acrylic emulsion-type resin, besides the above-mentioned polymerizable unsaturated monomer, a polymerizable unsaturated monomer such as vinyl ether, an alkoxysilyl group-containing monomer, styrene, $\alpha$-methyl styrene, vinyl chloride and butadiene may be contained. As the vinyl ether, ethyl vinyl ether, butyl vinyl ether, cyclohexyl vinyl ether and the like can be mentioned. Moreover, as the alkoxysilyl group-containing monomer, there can be mentioned vinyl trimethoxy silane, vinyl triethoxy silane, $\gamma$-(meth)acryloyloxypropyl trimethoxy silane, and $\gamma$-(meth)acryloyloxypropyl triethoxy silane. Each type of these polymerizable unsaturated monomers may be used singly, or two types or more thereof may be used in combination.

(b) Surfactant

In the acrylic emulsion-type resin, the polymerizable unsaturated monomer and the acrylic resin particles are dispersed into water by using the surfactant. Therefore, in the event of preparing the acrylic emulsion-type resin, it is necessary to use the surfactant, and in particular, it is preferable to use at least a polymerizable surfactant. Hence, the surfactant contained in the acrylic emulsion-type resin may be composed of only the polymerizable surfactant; however, the polymerizable surfactant and a surfactant other than the same may be combined with each other. Use of the polymerizable surfactant is advantageous in terms of enhancing water resistance of an emulsion composition (film).

With respect to 100 parts by mass of the polymerizable unsaturated monomer, a usage amount of the surfactant is set at preferably 2 to 20 parts by mass, more preferably 2 to 15 parts by mass. In a case where the usage amount of the surfactant is 2 parts by mass or more, then a polymerization reaction can be progressed without damaging polymerization stability of the polymerizable unsaturated monomer, and an occurrence of an aggregate can also be suppressed. Moreover, in a case where the usage amount of the surfactant is 20 parts by mass or less, then it becomes possible to suppress a decrease of the water resistance of the emulsion composition. Furthermore, in the case where the usage amount is 20 parts by mass or less, then interlayer adherence between the obtained film and a base material or a top film can be enhanced.

(c) Polymerization initiator

It is necessary to add the polymerization initiator in order to polymerize the polymerizable unsaturated monomer mixed into the aqueous medium and to form the acrylic resin particles. As the polymerization initiator, there can be mentioned a water-soluble polymerization initiator such as: persulfate such as potassium persulfate and ammonium persulfate; hydrogen peroxide solution; t-butyl hydroperoxide; hydrochloride of azobis amidinopropane; and the like. Moreover, there can be mentioned an oil-soluble polymerization initiator such as benzoyl peroxide, cumene hydroperoxide, dibutyl peroxide, and diisopropyl peroxy dicarbonate. Furthermore, there can be mentioned an oil-soluble polymerization initiator such as cumyl peroxy neodecanoate, cumyl peroxy octoate, and azobisisobutylonitrile. In addition, there can also be mentioned a redox-based polymerization initiator that combines a reducing agent such as sodium hydrogen sulfite, Rongalite, L-ascorbic acid, saccharides, and amines.

With respect to 100 parts by mass of the polymerizable unsaturated monomer present in an emulsion polymerization process, a usage amount of the polymerization initiator is set at preferably 0.01 to 3 parts by mass.

(d) Aqueous medium

In the acrylic emulsion-type resin, water is used as the aqueous medium that disperses the polymerizable unsaturated monomer and the acrylic resin particles. Here, as the water, pure water or ultrapure water such as ion exchanged water, ultrafiltrated water, reverse osmosis water and distilled water can be preferably used.

(e) Arbitrary component

The acrylic emulsion-type resin may further contain the arbitrary component. As the arbitrary component as described above, for example, there can be mentioned an ultraviolet absorber, a hindered amine-based photo stabilizer, a filler, a plasticizer, a pigment, a lubricant, a colorant, a thickener, an antistat, a pH adjuster, an air freshener, and the like. Each type of these arbitrary components may be used singly, or two types or more thereof may be used in combination.

Here, the acrylic emulsion-type resin is composed in such a manner that a plurality of the polymerizable unsaturated monomers in which glass transition temperatures (Tg) of polymers are different from one another are copolymerized with one another. Therefore, the glass transition temperature Tg (K: absolute temperature) of the acrylic emulsion-type resin can be calculated by using a following FOX expression.

[Math. 1]

$$1/Tg = W1/Tg1 + W2/Tg2 + \ldots + Wi/Tgi + \ldots Wn/Tgn$$

The above-described FOX expression defines Tgi (K) as a glass transition temperature of a homopolymer of each monomer that composes a copolymer composed in such a manner that n types of monomers are polymerized with one another, and defines Wi as a weight fraction of each monomer. Then, W1 + W2 + ... + Wi + ... + Wn = 1 is established.

Therefore, homopolymers with low Tg and homopolymers with high Tg are combined arbitrarily with one another, whereby the glass transition temperature Tg of the acrylic emulsion-type resin can be controlled to be set at 20°C or less. As the homopolymers with low Tg, for example, butyl acrylate (BA, homopolymer Tg: -45°C), 2-ethylhexyl acrylate (2-EHA, homopolymer Tg: -55°C) and the like are mentioned. Moreover, as the homopolymers with high Tg, for example, acrylic acid (AA, homopolymer Tg: 87°C), methacrylic acid (MAA, homopolymer Tg: 144°C) and the like are mentioned.

<Copper compound-supported titanium oxide>

The photocatalytic coating material according to this embodiment contains the copper compound-supported titanium oxide as active particles which exert the antibacterial properties and the antiviral properties. The copper compound-supported titanium oxide as described above is disposed on the surface of the film, thus making it possible to express high antibacterial properties and antiviral properties.

As the copper compound-supported titanium oxide as described above, any materials can be used as long as being particles in which a copper compound is supported on the titanium oxide and exerting the antibacterial properties and the antiviral properties by photoirradiation. However, as the copper compound-supported titanium oxide, it is preferable to use one described in Japanese Patent No. 5129897. In this copper compound-supported titanium oxide, a monovalent copper compound and a divalent copper compound are supported on the surface of the rutile-type titanium oxide, and accordingly, the copper compound-supported titanium oxide can exert high antibacterial properties and antiviral properties even under visible light.

More specifically, the above-mentioned copper compound-supported titanium oxide contains both of the monovalent copper compound and the divalent copper compound, and accordingly, is excellent in the antiviral properties and the photocatalytic activity. That is to say, the copper compound-supported titanium oxide contains the monovalent copper compound excellent in antiviral properties, and accordingly, has high antiviral properties. Moreover, the copper compound-supported titanium oxide contains the divalent copper compound required for the photocatalytic activity by the visible light, and accordingly, has high photocatalytic activity by the visible light. As the monovalent copper compound as described above, copper oxide (I), copper sulfide (I), copper iodide (I), copper chloride (I), copper hydroxide (I) and the like are mentioned, and in particular, the copper oxide (I) is preferable. As the divalent copper compound, copper hydroxide (II), copper oxide (II), copper chloride (II), copper acetate (II), copper sulfate (II), copper nitrate (II), copper fluoride (II), copper iodide (II), copper bromide (II) and the like are mentioned, and in particular, the copper hydroxide (II) ($Cu(OH)_2$) is preferable.

Moreover, in the above-mentioned copper compound-supported titanium oxide, a main component of the titanium oxide is the rutile-type titanium oxide, and accordingly, the copper compound-supported titanium oxide has higher antiviral properties and photocatalytic activity in comparison with those in a case where the anatase-type titanium oxide is the main component.

Note that, preferably, in the copper compound-supported titanium oxide contained in the photocatalytic coating material according to this embodiment, the monovalent copper compound and the divalent copper compound are supported on the surface of the rutile-type titanium oxide. Then, preferably the monovalent copper compound and the divalent copper compound, which are supported on the titanium oxide, contain the copper oxide (I) and the copper hydroxide (II), and more preferably, are composed of the copper oxide (I) and the copper hydroxide (II). The copper compound-supported titanium oxide as described above has high photocatalytic activity under the visible light, and particularly, even under room light of a fluorescent lamp or the like. Therefore, by using the copper compound-supported titanium oxide, it becomes possible to obtain the film provided with high inactivation properties for the bacteria and the virus.

In the copper compound-supported titanium oxide contained in the photocatalytic coating material, the fineness of grind thereof defined in JIS K5600-2-5 (Testing methods for paints - Part 2: Characteristics and stability of paints - Section 5: Fineness of grind) is 1 μm to 30 μm. In a case where the fineness of grind of the copper compound-supported titanium oxide is less than 1 μm, then a surface area of each copper compound-supported titanium oxide particle becomes excessively small, causing an apprehension that it may become difficult for the cold-curing photocatalytic coating material to express the photocatalytic activity. Moreover, in a case where the fineness of grind of the copper compound-supported titanium oxide exceeds 30 μm, then it is apprehended that an exterior appearance and durability of the film may be deteriorated since the copper compound-supported titanium oxide is aggregated.

Note that, preferably, the fineness of grind of the copper compound-supported titanium oxide is 5 μm to 20 μm. The fineness of grind stays within this range, whereby it becomes possible to suppress the decrease of the film physical properties such as the durability and the good exterior appearance while enhancing the photocatalytic activity of the copper compound-supported titanium oxide.

<Aqueous medium>

As the aqueous medium that disperses the acrylic emulsion-type resin and the copper compound-supported titanium oxide, a similar one to the aqueous medium for use in the event of preparing the acrylic emulsion-type resin can be used. Specifically, as the aqueous medium, pure water or ultrapure water such as ion exchanged water, ultrafiltrated water, reverse osmosis water and distilled water can be used.

<Film-forming assistant>

The photocatalytic coating material according to this embodiment contains the acrylic emulsion-type resin, the copper compound-supported titanium oxide and the aqueous medium. However, a film-forming assistant may be added unless the antibacterial properties, the antiviral properties and the film physical properties are not affected thereby to a large extent. By such addition of the film-forming assistant, it becomes possible to soften the acrylic resin particles, to promote fusion thereof, and to enhance film-forming properties thereof.

As the film-forming assistant, there is mentioned an organic solvent such as 2,2,4-trimethyl-1,3-pentanediol monoisobutylate, ethylene glycol monobutyl ether, diethylene glycol monobutyl ether, and ethylene glycol monohexyl ether. Moreover, ethylene glycol mono-2-ethyl hexyl ether, di(ethylene glycol)2-ethyl hexyl ether, and propylene glycol monobutyl ether are mentioned. Moreover, dipropylene glycol monobutyl ether, diethylene glycol dibutyl ether, and diethylene glycol n-butyl ether acetate are mentioned. Each type of these film-forming assistants may be used singly, or two types or more thereof may be used in combination.

However, as will be described later, in the photocatalytic coating material of this embodiment, a content of the organic solvent is less than 10 % by mass. That is to say, from a viewpoint of suppressing emission of a volatile organic compound (VOC) from the coating material, the content of the organic solvent in the photocatalytic coating material is set at less than 10 % by mass. Therefore, preferably, such an additional amount of the film-forming assistant is as small as possible.

The photocatalytic coating material according to this embodiment can be prepared by mixing the acrylic emulsion-type resin, the copper compound-supported titanium oxide and the aqueous medium with one another, and by dispersing the acrylic emulsion-type resin and the copper compound-supported titanium oxide into the aqueous medium.

As a dispersing device for dispersing these, for example, a disperser and a homogenizer can be used. As those using bead media such as glass and zircon, a ball mill, a bead mill, a sand mill, colloid mill and the like can be used. Each type of these dispersing devices may be used singly, or two types or more thereof may be used in combination. However, among these dispersing devices, it is preferable to use the bead mill from a viewpoint of efficiently dispersing the acrylic emulsion-type resin and the copper compound-supported titanium oxide.

Note that a dispersion time thereof just needs to be appropriately adjusted for each of the dispersing devices and the media so that the acrylic emulsion-type resin and the copper compound-supported titanium oxide can be highly dispersed in the aqueous medium. Moreover, the fineness of grind of the copper compound-supported titanium oxide sometimes decreases too much depending on the dispersing device and the dispersion time, and accordingly, it is preferable to appropriately adjust the dispersing device and the dispersion time so that the fineness of grind cannot decrease too much.

The photocatalytic coating material obtained in such a manner contains: the acrylic emulsion-type resin including the acrylic resin particles with an average particle diameter of 80 nm to 200 nm, the acrylic emulsion-type resin having a glass transition temperature of 20°C or less; the copper compound-supported titanium oxide with fineness of grind of 1 $\mu$m to 30 $\mu$m; and the aqueous medium. Therefore, it becomes possible to obtain the film, which cures even at ordinary temperature, and exerts high antibacterial properties and antiviral properties.

However, it is preferable that a content of the copper compound-supported titanium oxide in 100 parts by mass of a non-volatile matter content of the photocatalytic coating material be 1 to 80 parts by mass. It is apprehended that the antibacterial properties and the antiviral properties may decrease in a case where the content of the copper compound-supported titanium oxide in the non-volatile matter content is less than 1 part by mass. Moreover, it is also apprehended that hardness of the film may decrease. Furthermore, in a case where the content of the copper compound-supported titanium oxide exceeds 80 parts by mass, the binder resin falls short though it is possible to obtain sufficient antibacterial properties and antiviral properties, and it is possible that the film physical properties may decrease.

Note that, more preferably, the content of the copper compound-supported titanium oxide in the photocatalytic coating material is 20 to 60 parts by mass in 100 parts by mass of the non-volatile matter content of the photocatalytic coating material. The content of the copper compound-supported titanium oxide stays within this range, whereby it becomes possible to suppress the decrease of the film physical properties while providing the photocatalytic coating material with sufficient antibacterial properties and antiviral properties.

Moreover, from a viewpoint of enhancing the film-forming properties of the photocatalytic coating material according to this embodiment, it is preferable that the minimum film-forming temperature of the photocatalytic coating material be as low as possible.

The minimum film-forming temperature (MFT) is a temperature at which the acrylic resin particles can be deformed following evaporation of the aqueous medium. For example, in a construction coating material, it is preferable to set MFT at 5°C or less in a case of considering film formation in winter. As means for lowing MFT, there are (1) internal plasticization of lowering Tg of the binder resin and (2) external plasticization using the film-forming assistant and the plasticizer, which are as mentioned above. In accordance with the former one, Tg is also lowered, and it is difficult to obtain sufficient physical properties of the film. The latter one is general, but is not means, which will be positively usable in the future, from a viewpoint of reducing VOC. As a method for controlling the film-forming properties, blending of latex different in Tg is known. The latex with low Tg is mixed, whereby it becomes possible to lower MFT without using the film-forming assistant, and the latex can be used for reducing VOC.

From such a viewpoint, it is preferable that the minimum film-forming temperature of the photocatalytic coating material be 10°C or less. The minimum film-forming temperature is 10°C or less, whereby it becomes possible to enhance the film-forming properties at the ordinary temperature. Note that, in a case where the minimum film-forming temperature exceeds 10°C, then the film physical properties decrease, and it is apprehended that the antibacterial properties of the film may be deteriorated. It is possible to measure the minimum film-forming temperature in conformity with the temperature gradient plate method described in the ISO standard 2115.

Moreover, it is preferable that the content of the organic solvent in the photocatalytic coating material be less than 10 % by mass. The content is such a value as described above, whereby it becomes possible to reduce the emission of the volatile organic compound (VOC) from the photocatalytic coating material, and to suppress an environmental damage and a human health hazard. Moreover, in a case where the content of the organic solvent is too much, it is possible that the antibacterial properties may be deteriorated owing to the decrease of the film physical properties. Note that, from a viewpoint of further suppressing the environmental damage and the human health hazard, the content of the organic solvent in the photocatalytic coating material is more preferably less than 5 % by mass, still more preferably less than 3% by mass, and particularly preferably less than 0.1 % by mass.

An application target material to be applied with the photocatalytic coating material of this embodiment is not particularly limited. However, as will be described later, it is particularly preferable to use the photocatalytic coating material of this embodiment as a coating material for an interior material. The photocatalytic coating material has high antibacterial properties and antiviral properties, and accordingly, is particularly suitable as a coating material for a room interior.

An application method and a drying condition for applying the photocatalytic coating material to the application target material are not particularly limited. As a method of applying the photocatalytic coating material to at least a part of the application target material, a coating method (method using an air spray, a brush, a bar coater, a meyer bar, an air knife or the like) can be used. Moreover, as the application method, a printing method such as gravure printing, reverse gravure printing, offset printing, flexo printing, screen printing and the like) can also be used. Moreover, the drying condition is not particularly limited as long as being a condition in which the aqueous medium and the organic solvent are removed. In order to dry the photocatalytic coating material, it is possible to implement cold drying and forced drying using a dryer.

A thickness of the film obtained by the photocatalytic coating material is not particularly limited, either; however, from a viewpoint of enhancing an exterior appearance of a dried film, the thickness of the film is preferably 5 $\mu$m to 50 $\mu$m, more preferably 10 $\mu$m to 30 $\mu$m as a thickness after the drying. Even if the thickness of the film is out of this range, the effects of the present invention can be exerted. However, in a case where a thickness of the film is too large, it is possible that a problem such as a crack and a drying defect may occur. Meanwhile, in a case where the film is too thin, it is possible that there may occur such a defect that a base is visible as a result of a decrease of concealing properties.

[Cold-curing coating composition]

The cold-curing photocatalytic coating material according to this embodiment may form the film by being applied singly. However, from a viewpoint of enhancing weatherability and water resistance, a coating material containing a homopolymer may be added to the photocatalytic coating material, whereby the cold-curing coating composition may be obtained.

As the coating material as described above, which contains the homopolymer, (hereinafter, the coating material is also referred to as a homopolymer coating material), an acrylic polymer and the like can be used. Each type of the coating material containing the homopolymer may be used singly, or two or more thereof may be used in combination.

Moreover, it is preferable that a glass transition temperature of the homopolymer exceed 20°C. The glass transition temperature exceeds 20°C, whereby such an effect of enhancing the physical properties such as water resistance can be exerted.

Note that, in a case where the acrylic emulsion-type resin is anionic, and the homopolymer coating material is cationic, then it is possible that the acrylic resin particles and the homopolymer may be aggregated, and that the film physical properties may decrease. In a similar way, in a case where the acrylic emulsion-type resin is cationic, and the homopolymer coating material is anionic, then it is possible that the acrylic resin particles and the homopolymer may be aggregated. However, in a case where the acrylic emulsion-type resin is amphoteric, then it is less possible that the acrylic resin particles and the homopolymer may be aggregated whichever the homopolymer coating material may be anionic or cationic. Therefore, it is preferable to select the homopolymer coating material in consideration of polarity of the acrylic emulsion-type resin. Note that in a case of the cold-curing coating composition of this embodiment, it is preferable to use an anionic coating material as the homopolymer coating material.

Moreover, as such homopolymer coating materials, those which conform to JIS K5660 (Glossy synthetic resin emulsion paint) and JIS K5663 (Synthetic resin emulsion paint) are desirable, and further, those in which the content of VOC is small are desirable. As the homopolymer coating material as described above, for example, O-de Coat made by Nippon Paint Co., Ltd. and Ales Eco Clean (registered trademark) made by Kansai Paint Co., Ltd. are mentioned.

In 100 parts by mass of the non-volatile matter content of the cold-curing coating composition, the content of the copper compound-supported titanium oxide is preferably 2 to 30 parts by mass, and more preferably 5 to 20 parts by mass. In a case where the content of the copper compound-supported titanium oxide in the non-volatile matter content is 2 parts by mass or more, it becomes possible to obtain sufficient antibacterial properties and antiviral properties. Moreover, in a case where the content of the copper compound-supported titanium oxide is 30 parts by mass or less, high durability of the film can be obtained.

The cold-curing coating composition of this embodiment can be prepared by mixing the cold-curing photocatalytic coating material and the homopolymer coating material with each other. A mixing method is not particularly limited, and it is possible to mix the cold-curing photocatalytic coating material and the homopolymer coating material with each other by using a disperser, a homogenizer, a ball mill, a bead mill, a sand mill, a colloid mill and the like.

From the viewpoint of enhancing the exterior appearance of the dried film, a thickness of the film obtained by the cold-curing coating composition of this embodiment is preferably 5 $\mu$m to 50 $\mu$m, more preferably 10 $\mu$m to 30 $\mu$m as a thickness after the drying.

[Interior material]

The interior material according to this embodiment includes: an application target material; and a film, which is provided on the application target material, and is formed of the cold-curing photocatalytic coating material or the cold-curing coating composition. As mentioned above, the cold-curing photocatalytic coating material and the cold-curing coating composition of this embodiment have high antibacterial properties and antiviral properties, which result from the copper compound-supported titanium oxide, and further, the copper compound-supported titanium oxide has high photocatalytic activity under the visible light and particularly, even under the room light of the fluorescent lamp or the like. Therefore, the interior material applied with the cold-curing photocatalytic coating material or the cold-curing coating composition becomes capable of exerting the antibacterial properties and the antiviral properties even in a room.

In this embodiment, a material of the application target material may be basically anything such as organic polymer, ceramics, metal, glass, plastics, decorated plywood and composites of these. A shape of the application target material is not particularly limited, either, and for example, may be a simple shape such as a plate-like shape, a spherical shape, a columnar shape, a cylindrical shape, a stick-like shape, a prism-like shape and a hollow prism-like shape, or may be a complicated shape. Moreover, the application target material may be a porous body such as a filter.

As the application target material, there can be mentioned a plaster board, a plywood, a particle board, vinyl wallpaper, and a vinyl chloride flooring material. Moreover, there can be mentioned furniture such as a showcase, a filing cabinet, a bookshelf, a desk, a chair, a lounge suite, a chest, a dresser, a kitchen sink, a hanging cupboard, a cupboard, a display shelf, a table, and an electric instrument installation base.

Moreover, as the application target material, there are also preferable: a construction material such as a ceiling material, a tile, glass, wallpaper, a wall material, a flooring material and a standing finish fixture; an automotive interior material (instrument panel, seat, ceiling material); and the like. Furthermore, as the application target material, there are also preferable: an electric appliance such a refrigerator and an air conditioner; a textile product such as clothes and a curtain; industrial equipment; medical equipment; and the like. Moreover, as the application target material, for example, there are also preferable a door, a door handle, a knob, a handrail, an interior counter, furniture, a kitchen, a toilet, a bath, a lighting fixture, a touch panel, a switch, a sheet for use in these purposes, and the like. The film composed of the cold-curing photocatalytic coating material or cold-curing coating composition of this embodiment has high antibacterial properties and antiviral properties, and accordingly, is particularly effective for such surfaces with which human bodies and the like are frequently brought into contact.

Moreover, the cold-curing photocatalytic coating material or the cold-curing coating composition according to this embodiment can also be applied, to a filter for an air cleaner, a filter for an air conditioner and the like. Then, the cold-curing photocatalytic coating material and the cold-curing coating composition is useful since the cold-curing photocatalytic coating material and the cold-curing coating composition is used for not only a house but also a place, which is used by a large number of unidentified individuals and includes a hospital and an elderly facility, and a public transport such as a train, a bus and an aircraft, thus making it possible to reduce an infection risk of the bacteria/virus.

Moreover, depending on a material and shape of the application target material, the application target material can be subjected to appropriate pre-treatment before being applied with the cold-curing photocatalytic coating material or the cold-curing coating composition. For example, in a case of a housing interior, the application target material can be subjected to undercoating and intermediate coating, which conform to JIS A6909 (Coating materials for textured finishes of buildings), in response to the coating material containing the homopolymer.

EXAMPLES

A description is made below in more detail of examples and comparative examples of the present invention; however, the present invention is not limited to these examples.

[Example 1]

As the binder resin (acrylic emulsion-type resin), an ion complex-type functional coating binder RKW-500 made by Taisei Fine Chemical Co., Ltd. was used. Note that a glass transition temperature (Tg) of this binder resin is 10°C, a minimum film-forming temperature thereof is 5°C, and a resin solid content thereof is 30%.

Moreover, referring to Example 1 of Japanese Patent No. 5129897, a copper compound-supported titanium oxide, in which Cu2O and $Cu(OH)_2$ were supported on a surface of rutile-type titanium oxide, was prepared.

Then, into 333 parts by mass of the binder resin, 5 parts by mass of the copper compound-supported titanium oxide and 186 parts by mass of ion exchanged water were stirred by a homodisper (high-speed disperser), whereby a mill base was prepared. Moreover, the obtained mill base was subjected to dispersion treatment for 60 minutes by using glass beads with a diameter of 5 mm under operation of a water cooling facility, whereby a photocatalytic coating material of this example was obtained. Note that fineness of grind of the copper compound-supported titanium oxide in the obtained photocatalytic coating material was 10 μm.

Next, the obtained photocatalytic coating material was applied onto a glass plate by using a frame applicator (IMC-70BD type, made by Imoto Machinery Co., Ltd.), and was naturally dried in the air, whereby a test piece of this example was prepared. Note that a thickness of a film thus obtained was 15 μm.

[Example 2]

A photocatalytic coating material and test piece of this example were prepared in a similar way to Example 1 except that the binder resin was set at 333 parts by mass, that the copper compound-supported titanium oxide was set at 25 parts by mass, and that the ion exchanged water was set at 266 parts by mass.

[Example 3]

A photocatalytic coating material and test piece of this example were prepared in a similar way to Example 1 except that the binder resin was set at 333 parts by mass, that the copper compound-supported titanium oxide was set at 1 part by mass, and that the ion exchanged water was set at 170 parts by mass.

[Example 4]

A photocatalytic coating material and test piece of this example were prepared in a similar way to Example 1 except that the binder resin was changed to an ion complex-type functional coating binder AKW-107 made by Taisei Fine Chemical Co., Ltd. Note that a glass transition temperature (Tg) of this binder resin is 20°C at a core portion and 30°C at a shell portion, a minimum film-forming temperature (MFT) thereof is 5°C, and a resin solid content thereof is 30%.

[Example 5]

As raw materials of the photocatalytic coating material, the binder resin was used by 333 parts by mass, the copper compound-supported titanium oxide was used by 5 parts by mass, the ion exchanged water was used by 186 parts by mass, and further, as the film-forming assistant, 2,2,4-trimethyl-1,3-pentanediol monoisobutylate was used by 5 parts by mass. Moreover, the dispersion treatment time of the mill base was set at 20 minutes. A photocatalytic coating material and test piece of this example were prepared in a similar way to Example 1 except for the above.

[Example 6]

A photocatalytic coating material and test piece of this example were prepared in a similar way to Example 1 except that the time of the dispersion treatment using the glass beads was set at 20 minutes. Note that fineness of grind of the copper compound-supported titanium oxide in the obtained photocatalytic coating material was 20 μm.

[Example 7]

A photocatalytic coating material and test piece of this example were prepared in a similar way to Example 1 except that the time of the dispersion treatment using the glass beads was set at 120 minutes. Note that fineness of grind of the copper compound-supported titanium oxide in the obtained photocatalytic coating material was 5 μm.

[Example 8]

A photocatalytic coating material and test piece of this example were prepared in a similar way to Example 1 except that the binder resin was set at 333 parts by mass, that the copper compound-supported titanium oxide was set at 66 parts by mass, that the ion exchanged water was set at 266 parts by mass, and that the time of the dispersion treatment using the glass beads was set at 120 minutes.

[Example 9]

A photocatalytic coating material and test piece of this example were prepared in a similar way to Example 1 except that the binder resin was set at 333 parts by mass, that the copper compound-supported titanium oxide was set at 11 parts by mass, that the ion exchanged water was set at 266 parts by mass, and that the time of the dispersion treatment using the glass beads was set at 120 minutes.

[Example 10]

A photocatalytic coating material and test piece of this example were prepared in a similar way to Example 1 except that the binder resin was set at 333 parts by mass, that the copper compound-supported titanium oxide was set at 150 parts by mass, that the ion exchanged water was set at 266 parts by mass, and that the time of the dispersion treatment using the glass beads was set at 120 minutes.

[Comparative example 1]

A photocatalytic coating material and test piece of this example were prepared in a similar way to Example 1 except that the binder resin was set at 333 parts by mass, that the copper compound-supported titanium oxide was set at 500 parts by mass, and that the ion exchanged water was set at 366 parts by mass.

[Comparative example 2]

A photocatalytic coating material and test piece of this example were prepared in a similar way to Example 1 except that the binder resin was set at 333 parts by mass, that the copper compound-supported titanium oxide was set at 0.5 parts by mass, and that the ion exchanged water was set at 168 parts by mass.

[Comparative example 3]

A photocatalytic coating material and test piece of this example were prepared in a similar way to Example 1 except that the binder resin was changed to a coating-use aqueous acrylic resin (acrylic emulsion-type resin VONCOAT SA-6360) made by DIC Corporation). Note that a glass transition temperature (Tg) of this binder resin is 21 °C, a minimum film-forming temperature thereof is 26 to 32°C, and a resin solid content thereof is 50%.

[Comparative example 4]

As raw materials of the photocatalytic coating material, the binder resin was used by 333 parts by mass, the copper compound-supported titanium oxide was used by 5 parts by mass, the ion exchanged water was used by 186 parts by mass, and further, as the film-forming assistant, 2,2,4-trimethyl-1,3-pentanediol monoisobutylate was used by 40 parts by mass. Moreover, the dispersion treatment time of the mill base was set at 20 minutes. A photocatalytic coating material and test piece of this example were prepared in a similar way to Example 1 except for the above.

[Comparative example 5]

A photocatalytic coating material and test piece of this example were prepared in a similar way to Example 1 except that the dispersion treatment using the glass beads was not implemented. Note that fineness of grind of the copper compound-supported titanium oxide in the obtained photocatalytic coating material was 50 $\mu$m.

[Comparative example 6]

A photocatalytic coating material and test piece of this example were prepared in a similar way to Example 1 except that the time of the dispersion treatment was set at 120 minutes, and further, that zirconia beads with a diameter of 5 mm were used in place of the glass beads. Note that fineness of grind of the copper compound-supported titanium oxide in the obtained photocatalytic coating material was 0.5 $\mu$m.

[Comparative example 7]

The binder resin was changed to Hydro Pliolite 010 made by Omnova Solutions Inc. Note that a glass transition temperature (Tg) of this binder resin is 25°C, a minimum film-forming temperature thereof is -1°C, and a resin solid content thereof is 40%. Moreover, as raw materials of the photocatalytic coating material, the binder resin was set at 250 parts by mass, that the copper compound-supported titanium oxide was set at 5 parts by mass, and that the ion exchanged water was set at 186 parts by mass. Except for the above, a photocatalytic coating material and test piece of this example were prepared in a similar way to Example 1.

Table 1 shows the types, solid contents, average particle diameters and glass transition temperatures of the binder resins in the examples and the comparative examples. Moreover, Table 1 also shows the additional amounts and finenesses of grind of the copper compound-supported titanium oxides and the additional amounts of the film-forming assistants in combination.

Here, the average particle diameters of the binder resins used in the above-described examples and comparative examples were obtained by measuring the emulsion resins used in the respective examples by the dynamic light scattering, followed the cumulant analysis. Note that, for the measurement of the average particle diameters, a concentrated system-particle size analyzer FPAR-1000 (Otsuka Electronics Co., Ltd.) was used. Moreover, in conformity with JIS K5600-2-5, the fineness of grind of each copper compound-supported titanium oxide was measured by using a grind meter (1 to 50 $\mu$m) made by Coating Tester Co., Ltd.

[Table 1]

| | | Binder resin | | | | Copper compound-supported titanium oxide | | Film-forming assistant (parts by mass) |
|---|---|---|---|---|---|---|---|---|
| | Type | Solid content (parts by mass) | Average particle diameter ($\mu$m) | Tg (°C) | | Additional amount (parts by mass) | Fineness of grind ($\mu$m) | |
| Example 1 | RKW-500 | 100 | 120 | 10 | | 5 | 10 | 0 |
| Example 2 | RKW-500 | 100 | 120 | 10 | | 25 | 10 | 0 |
| Example 3 | RKW-500 | 100 | 120 | 10 | | 1 | 10 | 0 |
| Example 4 | AKW-107 | 100 | 120 | 18 | | 5 | 10 | 0 |
| Example 5 | RKW-500 | 100 | 120 | 10 | | 5 | 10 | 5 |
| Example 6 | RKW-500 | 100 | 120 | 10 | | 5 | 20 | 0 |
| Example 7 | RKW-500 | 100 | 120 | 10 | | 5 | 5 | 0 |
| Example 8 | RKW-500 | 100 | 120 | 10 | | 66 | 5 | 0 |
| Example 9 | RKW-500 | 100 | 120 | 10 | | 11 | 5 | 0 |
| Example 10 | RKW-500 | 100 | 120 | 10 | | 150 | 5 | 0 |
| Comparative example 1 | RKW-500 | 100 | 120 | 10 | | 500 | 10 | 0 |
| Comparative example 2 | RKW-500 | 100 | 120 | 10 | | 0.5 | 10 | 0 |
| Comparative example 3 | SA-6360 | 100 | 120 | 21 | | 5 | 10 | 0 |
| Comparative example 4 | RKW-500 | 100 | 120 | 10 | | 5 | 10 | 40 |
| Comparative example 5 | RKW-500 | 100 | 120 | 10 | | 5 | 50 | 0 |
| Comparative example 6 | RKW-500 | 100 | 120 | 10 | | 5 | 0.5 | 0 |
| Comparative example 7 | Hydro Pliolite | 100 | 250 | 25 | | 5 | 10 | 0 |

Following evaluation tests were implemented for the photocatalytic coating materials obtained in the above-described examples and comparative examples. Table 2 shows results of the evaluation tests.

[Ratio of copper compound-supported titanium oxide in non-volatile matter content]

With regard to the photocatalytic coating materials obtained in the above-described examples and comparative examples, non-volatile matter contents thereof were obtained in conformity with JIS K5601-1-2, and further, were subjected to elementary analysis, whereby ratios (% by mass) of the copper compound-supported titanium oxide in the non-volatile matter contents were measured.

[Minimum film-forming temperature (MFT)]

By using a thermal gradient tester (made by Rigaku Kogyosha), the minimum film-forming temperatures of the photocatalytic coating materials obtained in the examples and the comparative examples were measured in conformity with the temperature gradient plate method described in the ISO standard 2115.

[Exterior appearance]

The photocatalytic coating materials obtained in the respective examples and comparative examples were applied onto a hiding-chart prescribed in JIS K5600-4-1 (Testing methods for paints - Part 4: Visual caracteristics of film - Section 1: Hiding power (for light-coloured paints)), followed by drying. Then, films thus obtained were visually observed, and those in which a crack and an aggregate were invisible were evaluated as "○", and those in which a crack or an aggregate was visible were evaluated as "×".

[Antibacterial properties]

For the films obtained in the respective examples and comparative examples, an antibacterial property evaluation was implemented by using colon bacillus in conformity with JIS Z2801 (Antibacterial products - Test for antibacterial activity and efficacy). Those in which antibacterial activity values per hour were 1 or more were evaluated as "○", and those in which the antibacterial activity values per hour were less than 1 were evaluated as "x".

[Antiviral properties]

An antiviral property evaluation was implemented in conformity with JIS R1756 (Fine ceramics (advanced ceramics, advanced technical ceramics)-Determination of antiviralactivity of photocatalytic materials under indoor lighting environment-Test method using bacteriophage Q-beta), which was constituted as an alternative evaluation method of antiviral property tests. Note that, as a condition of light irradiation, such irradiation was performed for 1 hour by 1000 Lx as a total light output of a fluorescent lamp. Those in which the antibacterial activity values per hour were 3 or more were evaluated as "○", those in which the antibacterial activity values per hour were 0.5 or more to less than 3 were evaluated as "Δ", and those in which the antibacterial activity values per hour were less than 0.5 were evaluated as "×".

[Water resistance]

The test pieces obtained in the respective examples and comparative examples were immersed into ion exchanged water at ordinary temperature (25°C) for 1 week. Then, films thus subjected to the immersion were visually observed, and those in which exfoliation and swelling were invisible were evaluated as "○", and those in which exfoliation or swelling was visible were evaluated as "×".

[Table 2]

| | Ratio of copper compound- supported titanium oxide in non-volatile matter content (% by mass) | MFT of photocatalytic coating material (°C) | Film properties | | | |
|---|---|---|---|---|---|---|
| | | | Exterior appearance | Antibacterial property | Antiviral property | Water resistance |
| Example 1 | 4.8 | 5 | ○ | ○ | ○ | ○ |
| Example 2 | 20 | 5 | ○ | ○ | ○ | ○ |
| Example 3 | 1.0 | 5 | ○ | ○ | ○ | ○ |
| Example 4 | 9.1 | 5 | ○ | ○ | ○ | ○ |
| Example 5 | 4.8 | 0 | ○ | ○ | ○ | ○ |
| Example 6 | 4.8 | 5 | ○ | ○ | ○ | ○ |
| Example 7 | 4.8 | 5 | ○ | ○ | ○ | ○ |
| Example 8 | 40 | 5 | ○ | ○ | ○ | ○ |
| Example 9 | 10 | 5 | ○ | ○ | ○ | ○ |
| Example 10 | 60 | 5 | ○ | ○ | ○ | ○ |
| Comparative example 1 | 83 | 5 | × | ○ | ○ | × |
| Comparative example 2 | 0.50 | 5 | ○ | x | ○ | ○ |

(continued)

| | Ratio of copper compound- supported titanium oxide in non-volatile matter content (% by mass) | MFT of photocatalytic coating material (°C) | Film properties | | | |
|---|---|---|---|---|---|---|
| | | | Exterior appearance | Antibacterial property | Antiviral property | Water resistance |
| Comparative example 3 | 4.8 | 21 | ○ | × | × | ○ |
| Comparative example 4 | 4.8 | 0 | ○ | × | × | × |
| Comparative example 5 | 4.8 | 5 | × | ○ | ○ | × |
| Comparative example 6 | 4.8 | 5 | ○ | × | × | ○ |
| Comparative example 7 | 4.8 | -1 | ○ | × | × | ○ |

As shown in Table 2, Examples 1 to 10 exhibited good results in the evaluations of all of the exterior appearance, the antibacterial properties, the antiviral properties and the water resistance.

In contrast, in Comparative example 1, the content of the copper compound-supported titanium oxide in 100 parts by mass of the non-volatile matter content of the photocatalytic coating material exceeded 80 parts by mass, and accordingly, the film physical properties such as the exterior appearance and the water resistance were deteriorated. In Comparative example 2, the content of the copper compound-supported titanium oxide in 100 parts by mass of the non-volatile matter content of the photocatalytic coating material was less than 1 part by mass, and accordingly, the antibacterial properties and antiviral properties thereof became insufficient.

In Comparative example 3 and Comparative example 7, the glass transition temperature of the binder resin exceeded 20°C, and accordingly, the antibacterial properties and antiviral properties thereof became insufficient. In Comparative example 4, the content of the organic solvent exceeded 10 % by mass, and accordingly, the film physical properties were deteriorated, and not only the water resistance but also the antibacterial properties and the antiviral properties decreased. In Comparative example 5, the fineness of grind of the copper compound-supported titanium oxide exceeded 30 $\mu$m, and accordingly, the film physical properties were deteriorated, and in Comparative example 6, the fineness of grind was less than 1 $\mu$m, and accordingly, the photocatalytic activity decreased, and the antibacterial properties and the antiviral properties were deteriorated.

INDUSTRIAL APPLICABILITY

The cold-curing photocatalytic coating material of the present invention optimizes a molecular structure and film-forming temperature of the aqueous binder resin, thus making it possible to dispose a large amount of the active particles on the surface of the film. As a result, the film becomes capable of expressing high antibacterial activity and antiviral activity. Moreover, even in the case where the content of the organic solvent is reduced, the cold-curing photocatalytic coating material of the present invention improves the drying properties and fluidity thereof, and is capable of suppressing the decrease of the film physical properties.

**Claims**

1. A cold-curing photocatalytic coating material, comprising:

    an acrylic emulsion-type resin including acrylic resin particles with an average particle diameter of 80 nm to 200 nm, the acrylic emulsion-type resin having a glass transition temperature of 20°C or less, the average particle diameter being measured by the dynamic light scattering and obtained by the cumulant analysis method;
    copper compound-supported titanium oxide in which fineness of grind prescribed in JIS K5600-2-5 is 1 $\mu$m to 30 $\mu$m; and
    an aqueous medium that disperses the acrylic emulsion-type resin and the copper compound-supported titanium oxide,

wherein the copper compound-supported titanium oxide is contained by 1 to 80 parts by mass in 100 parts by mass of a non-volatile matter content of the cold-curing photocatalytic coating material, and

a minimum film-forming temperature which is measured in conformity with the temperature gradient plate method described in the ISO standard 2115 is 10°C or less, and a content of an organic solvent is less than 10 % by mass.

2.  A cold-curing coating composition comprising:

the cold-curing photocatalytic coating material according to claim 1; and a coating material containing a homopolymer.

3.  The cold-curing coating composition according to claim 2, wherein a glass transition temperature of the homopolymer exceeds 20°C.

4.  The cold-curing coating composition according to claim 2 or 3, wherein the coating material containing the homopolymer is an anionic coating material.

5.  An interior material, comprising:

an application target material; and

a film which is provided on the application target material and which is formed of the cold-curing photocatalytic coating material according to claim 1.

6.  An interior material, comprising:

an application target material; and

a film which is provided on the application target material and which is formed of the cold-curing coating composition according to any one of claims 2 to 4.

**Patentansprüche**

1.  Kalthärtendes photokatalytisches Beschichtungsmaterial, umfassend:

ein acrylemulsionsartiges Harz, einschließend Acrylharzteilchen mit einem gemittelten Teilchendurchmesser von 80 nm bis 200 nm, wobei das acrylemulsionsartige Harz eine Glasübergangstemperatur von 20 °C oder weniger aufweist, der gemittelte Teilchendurchmesser durch die dynamische Lichtstreuung gemessen und durch das Kumulationsanalyseverfahren erhalten ist;

kupferverbindungsunterstütztes Titanoxid, in welchem eine Mahlfeinheit, festgelegt in JIS K5600-2-5, 1 $\mu$m bis 30 $\mu$m beträgt; und

ein wässriges Medium, welches das acrylemulsionsartige Harz und das kupferverbindungsunterstützte Titanoxid dispergiert,

wobei das kupferverbindungsunterstützte Titanoxid mit 1 bis 80 Massenteilen in 100 Massenteilen eines nichtflüchtigen Materiegehalts des kalthärtenden photokatalytischen Beschichtungsmaterials enthalten ist und

eine Mindestfilmbildungstemperatur, welche in Übereinstimmung mit dem Temperaturgradientenplattenverfahren, beschrieben in dem ISO-Standard 2115, gemessen ist, 10 °C oder weniger beträgt und ein Gehalt eines organischen Lösungsmittels weniger als 10 Massen-% beträgt.

2.  Kalthärtende Beschichtungszusammensetzung, umfassend:

das kalthärtende photokatalytische Beschichtungsmaterial nach Anspruch 1; und

ein Beschichtungsmaterial, enthaltend ein Homopolymer.

3.  Kalthärtende Beschichtungszusammensetzung nach Anspruch 2, wobei eine Glasübergangstemperatur des Homopolymers 20 °C überschreitet.

4.  Kalthärtende Beschichtungszusammensetzung nach Anspruch 2 oder 3, wobei das Beschichtungsmaterial, enthaltend das Homopolymer, ein anionisches Beschichtungsmaterial ist.

**5.** Innenmaterial, umfassend:

ein Anwendungszielmaterial; und
einen Film, welcher auf dem Anwendungszielmaterial bereitgestellt ist und welcher aus dem kalthärtenden photokatalytischen Beschichtungsmaterial nach Anspruch 1 gebildet ist.

**6.** Innenmaterial, umfassend:

ein Anwendungszielmaterial; und
einen Film, welcher auf dem Anwendungszielmaterial bereitgestellt ist und welcher aus der kalthärtenden Beschichtungszusammensetzung nach einem der Ansprüche 2 bis 4 gebildet ist.

**Revendications**

**1.** Matière de revêtement photocatalytique durcissable à froid, comprenant:

une résine acrylique de type émulsion comprenant des particules de résine acrylique présentant un diamètre particulaire moyen de 80 nm à 200 nm, la résine acrylique de type émulsion ayant une température de transition vitreuse de 20°C ou moins, le diamètre particulaire moyen étant mesuré par diffusion dynamique de la lumière et obtenu par la méthode d'analyse des cumulants;
un oxyde de titane supporté par un composé de cuivre dans lequel le degré de mouture prescrit dans le document JIS K5600-2-5 va de 1 $\mu$m à 30 $\mu$m; et
un milieu aqueux qui disperse la résine acrylique de type émulsion et l'oxyde de titane supporté par un composé de cuivre,
dans laquelle l'oxyde de titane supporté par un composé de cuivre est contenu par 1 à 80 parties en masse dans 100 parties en masse d'une teneur en matière non volatile de la matière de revêtement photocatalytique durcissable à froid, et
une température minimale de formation de film, laquelle est mesurée conformément à la méthode par plaque à gradient de température décrite dans la norme ISO 2115 est de 10°C ou moins, et une teneur en solvant organique est inférieure à 10% en masse.

**2.** Composition de revêtement durcissable à froid comprenant:

la matière de revêtement photocatalytique durcissable à froid selon la revendication 1; et
une matière de revêtement contenant un homopolymère.

**3.** La composition de revêtement durcissable à froid selon la revendication 2, dans laquelle la température de transition vitreuse de l'homopolymère dépasse 20°C.

**4.** La composition de revêtement durcissable à froid selon la revendication 2 ou 3, dans laquelle la matière de revêtement contenant l'homopolymère est une matière de revêtement anionique.

**5.** Une matière d'intérieur, comprenant:

une matière cible d'application; et
un film disposé sur la matière cible d'application et qui est formée de la matière de revêtement photocatalytique durcissable à froid selon la revendication 1.

**6.** Une matière d'intérieur, comprenant:

une matière cible d'application; et
un film disposé sur la matière cible d'application et qui est formé de la composition de revêtement durcissable à froid selon l'une quelconque des revendications 2 à 4.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008255101 A
- JP 2011042642 A
- JP 2003275601 A

- JP 2009161708 A
- JP 5129897 B